Europäisches Patentamt

European Patent Office

Office européen des brevets

(19)

(11) Numéro de publication: **0 401 143**
**A2**

## (12) DEMANDE DE BREVET EUROPEEN

(21) Numéro de dépôt: **90440048.8**

(22) Date de dépôt: **25.05.90**

(51) Int. Cl.⁵: **G01N 22/00**

(30) Priorité: **26.05.89 FR 8907138**

(43) Date de publication de la demande:
**05.12.90 Bulletin 90/49**

(84) Etats contractants désignés:
**AT BE CH DE DK ES GB GR IT LI LU NL SE**

(71) Demandeur:
**FRANCE-MAINTENANCE-AUTOMATISME, S.A.**
**Rue André Fruchard, Ensemble Industrial J.**
**Prouvé**
**F-54320 Maxeville(FR)**

Demandeur: **CENTRE DE RECHERCHE EN**
**AUTOMATIOUE DE NANCY, LABORATOIRE**
**d'AUTOMATIQUE ET DE COMMANDE**
**NUMERIQUE, FACULTE DES SCIENCES**
**UNIVERSITE DE NANCY I, Boulevard des**
**Aiguillettes, B.P. 239**

**F-54506 Vandoeuvre Les Nancy(FR)**

(72) Inventeur: **Martin, Patrick**
**6 Rue de la Pleiade**
**F-54600 Villers Les Nancy(FR)**
Inventeur: **Vincent, Yvon**
**3 Rue de la Fagatte**
**F-54280 Sorneville(FR)**
Inventeur: **Lambert, Pascal**
**25 avenue du Blois Châtel**
**F-54270 Essey Les Nancy(FR)**
Inventeur: **Mallick, Germain**
**5 rue St. Thiebaut, Résidence St. Sébastien**
**F-5400 Nancy(FR)**

(74) Mandataire: **Nuss, Pierre et al**
**10, rue Jacques Kablé**
**F-67000 Strasbourg(FR)**

(54) **Procédé de mesure de caractéristiques physiques, de détection et d'identification de zones de défauts d'une pièce, notamment en matière ligneuse, et dispositif pour la mise en oeuvre d'un tel procédé.**

(57) La présente invention concerne un procédé de mesure de caractéristiques physiques, de détection et d'identification de zones de défauts d'une pièce, notamment en matière ligneuse, et un dispositif pour la mise en oeuvre d'un tel procédé.

Procédé caractérisé en ce qu'il consiste à faire défiler la pièce (1) à examiner dans une zone (3) de rayonnements électomagnétiques du type hyperfréquence ou micro-ondes, à mesurer l'onde traversant la pièce (1), et à évaluer les données ainsi recueillies.

Fig.1

**Procédé de mesure de caractéristiques physiques, de détection et d'identification de zones de défauts d'une pièce, notamment en matière ligneuse, et dispositif pour la mise en oeuvre d'un tel procédé**

La présente invention concerne le domaine du contrôle non-destructif de pièces dans le but d'une classification qualitative de celles-ci et/ou d'une purge de leurs parties inutilisables, et a pour objet un procédé de mesure de caractéristiques physiques de détection et d'identification de zones de défauts d'une pièce, notamment en matière ligneuse.

L'invention a également pour objet un dispositif pour la mise en oeuvre d'un tel procédé.

Actuellement, il existe divers types de dispositifs de contrôle non-destructifs de pièces que l'on peut classer dans plusieurs catégories, à savoir, les contrôles par champs magnétiques, les contrôles par rayons X ou gamma, les contrôles par rayons lumineux et les contrôles par ultra-sons. Mais chacun de ces modes de contrôle présente des inconvénients qui ne permettent, en général, leur emploi que pour certains matériaux spécifiques ou encore dans des conditions limitatives d'utilisation ou enfin, en mettant en oeuvre un matériel lourd, encombrant et coûteux.

En effet, le contrôle magnétique, par exemple, nécessite un appareillage onéreux et ne permet que de contrôler des pièces métalliques non-amagnétiques.

En ce qui concerne le contrôle par rayons X ou gamma, il nécessite un matériel volumineux donc coûteux, expose constamment le personnel qualifié, nécessaire à sa mise en oeuvre, à un danger d'irradiation, et est difficilement applicable en milieu industriel du fait de sa complexité et de l'entretien constant dont il doit faire l'objet pour fonctionner dans des conditions satisfaisantes.

Pour ce qui est du contrôle par rayons lumineux, au moyen d'une vision artificielle par caméra, il ne permet d'effectuer qu'une mesure superficielle du matériau, et ne caractérise que son aspect visuel. De plus, en ambiance industrielle, il peut fournir des informations erronnées quand la surface du matériau et/ou le matériau lui-même sont sales, ou que la caméra est sujette à un écrasement par dépôt de poussière sur l'objectif. Enfin, les caméras actuelles ne peuvent prendre des images et les traiter qu'à raison d'une analyse toutes les 20 milli-secondes, ce qui peut être insuffisant dans le cas de vitesses de défilement élevées du matériau.

Le problème majeur posé par l'utilisation d'un contrôle par ultra-sons réside dans le couplage entre l'émetteur et le matériau. En effet, la mesure doit se faire par contact ou avec le matériau plongé dans de l'eau, pour permettre une bonne émission des ondes ultra-sonores.

Or, de plus en plus, le contrôle non-destructif doit être intégré dans la chaîne de production des différentes pièces, ceci en vue d'une rationnalisation de la fabrication par une détection précoce des défauts.

Ceci se trouve notamment vérifié pour la filière de production de pièces en matières ligneuses, qui, bien que se mécanisant et s'automatisant fortement, souffre d'un manque évident de capteurs et de dispositifs de contrôle et de détection de défauts, utilisables en milieu industriel.

Il est vrai que des pièces en matières ligneuses sont de plus en plus utilisées comme éléments porteurs et résistants d'une construction ou d'une structure ; il devient donc obligatoire d'estimer avec précision les caractéristiques mécaniques et physiques de ces pièces.

Or, jusqu'à présent, la diversité morphologi que des différentes variétés de matières ligneuses entraînait une surcotation des coefficients de sécurité ou une perte de matière importante lors d'un classement visuel, qui reste subjectif et sujet aux variations du facteur humain. Seule une automatisation de la détection des défauts et de la délimitation des parties à purger, ainsi que des mesures physiques adaptées, permettent de garantir des caractéristiques internes du matériau maintenues dans des marges de tolérance plus étroites.

Le problème posé à la présente invention consiste donc à concevoir un procédé de contrôle non-destructif, notamment pour pièces en matières ligneuses, permettant de s'affranchir d'un contrôle visuel, ne se basant pas sur les propriétés magnétiques des pièces, ni sur leur aspect visuel, n'utilisant ni les rayons X, ni les rayons gamma, et ne nécessitant pas une immersion ou un contact physique avec la pièce, ce procédé permettant, à l'aide d'un matériel peu encombrant et de faible prix, de réaliser, de manière rapide et en milieu industriel, des mesures de caractéristiques physiques, une détection et une identification de zones de défauts d'une pièce, notamment en matière ligneuse.

Ce problème est précisément résolu grâce au procédé conforme à l'invention, caractérisé en ce qu'il consiste à faire défiler la pièce à examiner dans une zone de rayonnements électromagnétiques du type hyperfréquence ou micro-ondes, à mesurer l'onde traversant la pièce, et à évaluer et à exploiter les données ainsi recueillies.

L'invention a également pour objet un dispositif pour la mise en oeuvre du procédé, essentiellement constitué par un dispositif tranporteur, convoyant la pièce et s'étendant de part et d'autre d'une zone de rayonnements électromagnétiques.

du type hyperfréquence ou micro-ondes, délimitée par au moins un émetteur et au moins un récepteur, disposés sensiblement perpendiculairement au plan du dispositif transporteur, par un dispositif électronique de transformation et d'évaluation des signaux de mesure de l'onde traversant la pièce, issus du récepteur, et par au moins un dispositif de restitution ou d'exploitation des données délivrées par le dispositif électronique.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue d'ensemble du dispositif pour la mise en oeuvre du procédé conforme à l'invention ;

la figure 2 est une vue en perspective de la configuration des éléments d'émission, de réception et de traitement du dispositif conforme à l'invention, représenté à la figure 1, lors de la détection et de l'identification des défauts ;

la figure 3 est une vue en perspective de la configuration des éléments représentés à la figure 2 lors d'une mesure de la pente de fil et de la densité ;

la figure 4, représente un motif caractéristique d'un noeud sur une courbe échantillonnée, obtenue à partir des signaux délivrés par une tête de réception ayant capté les rayonnements électromagnétiques qui ont traversées le défaut par son centre au cours du défilement de la pièce ;

la figure 5, représente un motif caractéristique d'un noeud sur une courbe échantillonnée obtenue à partir des signaux délivrés par une tête de réception ayant capté les rayonnements électromagnétiques qui ont traversé le défaut à sa périphérie au cours du défilement de la pièce ;

la figure 6 représente un motif caractéristique d'une amorce de branche sur une courbe échantillonnée, obtenue à partir des signaux délivrés par une tête de réception ayant capté les rayonnements électromagnétiques qui ont traversé le défaut au cours du défilement de la pièce, et

la figure 7 représente les variations de la puissance traversant la pièce en matière ligneuse, suivant l'orientation du champ de rayonnements électromagnétiques, ainsi que la puissance moyenne transmise.

Conformément à l'invention, le procédé de mesure, de détection et d'identification consiste à faire défiler la pièce 1 à examiner dans une zone 3 de rayonnements électromagnétiques du type hyperfréquence ou micro-ondes, à mesurer l'onde traversant la pièce 1, et à évaluer et à exploiter les données ainsi recueillies.

L'invention a également pour objet un dispositif pour la mise en oeuvre du procédé décrit ci-dessus, essentiellement constitué par un dispositif transporteur 2, convoyant la pièce 1 et s'étendant de part et d'autre d'une zone 3 de rayonnements électromagnétiques du type hyperfréquence ou micro-ondes, délimitée par au moins un émetteur 4 et au moins un récepteur 5, disposés sensiblement perpendiculairement au plan du dispositif transporteur 2, par un dispositif électronique 6 de transformation et d'évaluation des signaux de mesure de l'onde traversant la pièce 1, issus du récepteur 5, et par au moins un dispositif de restitution ou d'exploitation des données délivrées par le dispositif électronique 6.

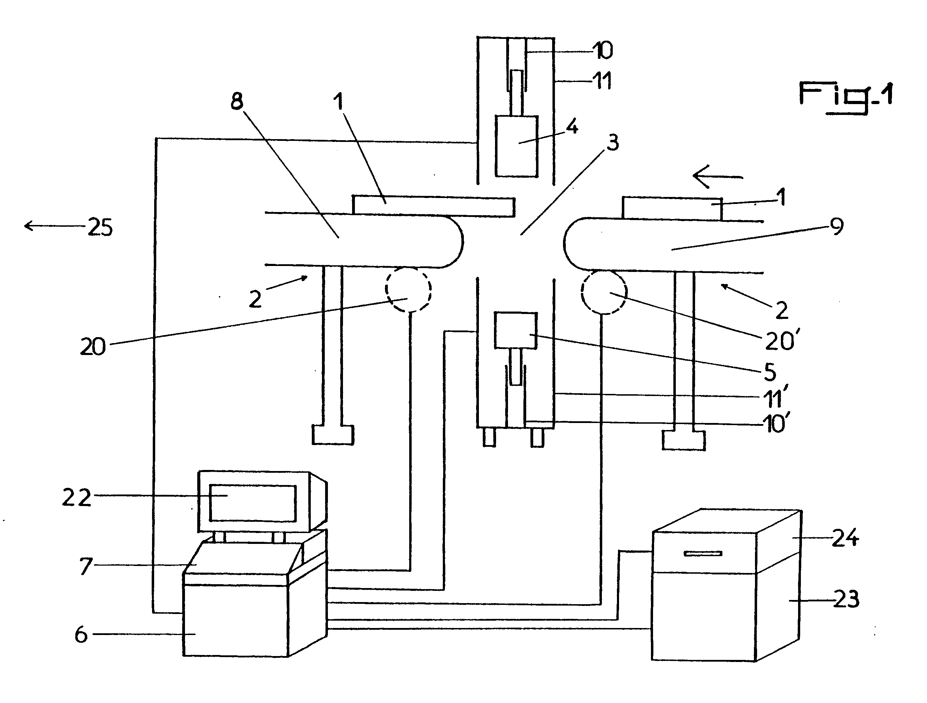

Un dispositif et un procédé tels que décrits ci-dessus, et représentés à la figure 1 des dessins annexés, sont facilement intégrables dans une chaîne de production. En effet, 1 installation du dispositif n'entraîne aucune modification dans l'agencement des postes de travail et l'application du procédé ne bouleverse aucunement la suite d'opérations et de manipulations d'une telle chaîne. En effet, il suffit d'un espace libre, entre deux postes de travail, par exemple, pour l'installation de l'émetteur 4 et du récepteur 5, préférentiellement à un endroit où la pièce 1, en défilant, se trouve en porte-à-faux entre deux supports, étant ainsi librement accessible sur toutes ses faces sur une partie de sa longueur.

On peut ainsi effectuer les opérations de mesures, de détection et d'identification, faisant partie du procédé, sans immobiliser la pièce 1 et sans aucune manipulation de celle-ci ; le contrôle et les mesures s'effectuent ainsi en continu, sans contact et sans perturber le flux de la production.

L'emploi de rayonnements électromagnétiques du type hyperfréquence ou micro-ondes pour le dispositif conforme à l'invention, résulte d'un choix impliquant les nombreux avantages présentés par ce type de rayonnements.

En effet, elles assurent un couplage efficace dans l'air, entre l'émetteur 4 et le récepteur 5, en passant à travers la pièce 1 et sont totalement indépendantes de l'état de surface desdites pièces 1 en matière ligneuse, celles-ci ne nécessitant donc pas, pour être contrôlées, un traitement spécial, tels que rabotage, ponçage, etc... De plus, l'utilisation de micro-ondes permet également une mesure en continu et sans contact physique avec la pièce 1. D'autre part, elles autorisent une grande vitesse d'exploitation et de contrôle. Et, en outre, dans la plupart des cas, une puissance micro-onde faible est largement suffisante pour des mesures et des contrôles valables, de sorte que la possibilité d'existence d'un rayonnement néfaste pour les utilisateurs est quasiment inexistante.

Selon une caractéristique de l'invention, le dispositif de restitution ou d'exploitation des données comporte un écran de visualisation 22 graphique et/ou alphanumérique. Celui-ci permet à un éventuel manipulateur d'estimer la qualité de la pièce 1 et de décider de la nécessité du purgement des zones à défauts. Dans ce cas, le procédé conforme à l'invention remplace le contrôle visuel direct de la pièce 1, sujet à de nombreuses erreurs, par un contrôle en profondeur.

Selon une autre caractéristique de l'invention, le dispositif de restitution ou d'exploitation des données est muni, en outre, d'une imprimante et/ou d'un dispositif de sauvegarde des données sur un support amovible. Ces éléments supplémentaires du dispositif de restitution permettent de garder une trace du contrôle et des mesures effectuées pour une éventuelle exploitation ultérieure des informations ainsi sauvegardées, et donnent à l'utilisateur la possibilité d'estimer globalement et qualitativement un lot important de pièces 1.

Selon une caractéristique de l'invention, le dispositif transporteur 2 est constitué par deux bandes transporteuses 8 et 9 séparées, disposées de part et d'autre de la zone 3 de rayonnement, et alignées entre elles. Celles-ci ne sont pas nécessairement des bandes propres au dispositif selon l'invention, mais peuvent faire partie de machines déjà en place ; il suffit que le dispositif conforme à l'invention puisse controler leur fonctionnement.

En effet, selon une autre caractéristique de l'invention, et comme le montre la figure 1 des dessins annexés, chaque bande transporteuse 8 ou 9 est équipée d'un codeur incrémental 20 ou 20', commandé par le dispositif électronique 6 et permettant d'adapter la vitesse de défilement de la pièce 1 à la vitesse de mesure du dispositif. On peut ainsi, d'une part, éviter des mesures imprécises ou erronnées, dues à des vitesses de défilement trop élevées ou mal adaptées, et, d'autre part, règler la résolution longitudinale de détection des défauts, en permettant de l'adapter aux dimensions des anomalies que l'on veut relever.

Conformément à la figure 1, l'émetteur 4 ainsi que le récepteur 5 sont montés, de manière réglable, sur un cadre de support 10 ou 10'.

Le montage particulier de l'émetteur 4 et du récepteur 5, confère au dispositif conforme à l'invention, la possibilité de faire varier l'écartement entre ledit émetteur 4 et ledit récepteur 5, adaptant celui-ci à l'épaisseur des pièces 1 à examiner et assurant ainsi toujours un couplage optimum. Pratiquement, ce montage peut se présenter sous la forme d'un dispositif rail-glissière, d'éléments creux emboîtables et coulissants, ou encore d'un dispositif à vérins facilement réglable.

Selon une autre caractéristique de l'invention, les cadres supports 10 et 10', ainsi que le récepteur 5 et l'émetteur 4 sont montés dans des armoires de protection 11 et 11'.

Les armoires de protection 11 et 11' remplissent une double fonction, à savoir, d'une part, elles protègent les éléments sensibles que sont l'émetteur 4 et le récepteur 5, des diverses attaques du milieu industriel, tels que poussières, chocs, vibration, etc... et, d'autre part, elles jouent le rôle d'une cage de Faraday, isolant l'extérieur des rayonnements de l'émetteur 4, mais également le récepteur 5 des ondes parasites provenant du milieu environnant. Elles permettent, de cette manière, de réaliser un meilleur couplage émetteur-récepteur, qui est encore augmenté par une conformation en tunnel du côté ouvert de chacune des deux armoires de protection 11 et 11', qui focalise et rend directionnel le rayonnement de l'émetteur 4 vers le récepteur 5.

En outre, et conformément à l'invention, l'émetteur 4 est constitué par une alimentation 12, à laquelle est reliée une source 13 de rayonnements électromagnétiques du type hyperfréquence ou micro-ondes, dont la sortie est raccordée, par l'intermédiaire d'un câble coaxial hyperfréquence 14, à un multiplexeur 15 hyperfréquence, commandé par le dispositif électronique 6, le signal issu de la source 13 étant transmis totalement à une, ou, alternativement et partiellement, à plusieurs antennes 21 émettrices, branchées sur une ou plusieurs sorties du multiplexeur 15.

Le montage d'un multiplexeur 15 hyperfréquence entre la source 13 et les antennes émettrices 21 permet d'avoir un émetteur 4 modulable et extensible pour ce qui est du nombre d'antennes 21 utilisées et donc une surface variable de la pièce 1, soumise au rayonnement, d'où également des performances variables du dispositif, en ce qui concerne la vitesse d'exploration et donc de défilement de la pièce 1, ainsi que pour les dimensions maximales admissibles pour lesdites pièces 1. Les antennes 11 utilisées sont, préférentiellement, des antennes-cornets ou à circuit imprimé, permettant une meilleure diffusion de l'onde. De même, la longueur d'onde du rayonnement a, avantageusement, une grandeur équivalente à la dimension des défauts à localiser.

Selon une autre caractéristique de l'inventon, le récepteur 5 est constitué par au moins une tête de réception 16, réalisée au moyen d'au moins une diode 17 associée à une résistance de charge 18 variable. Cette dernière permet de régler très précisément le point de fonctionnement de la diode. Une tête de réception 16, ainsi réalisée, délivre un courant proportionnel au carré de la valeur du champ auquel elle est soumise. Ce courant est donc représentatif de la puissance reçue au niveau du récepteur. Afin d'augmenter les performances dudit récepteur 5, on peut munir chaque tête de réception 16 d'une antenne-cornet ou à circuit imprimé.

Selon une autre caractéristique de l'invention, le dispositif électronique 6, éventuellement muni d'une console d'utilisation 7, est avantageusement sous la forme d'un calculateur 19, commandant simultanément tous les éléments constitutifs du dispositif, traitant et interprétant les données issues du récepteur 5, et délivrant les informations résultantes, relatives à des caractéristiques de la pièce 1 examinée, telles que, notamment, densité moyenne, pente de fil moyen et emplacement et nature des défauts, soit à un écran de visualisation, soit à une imprimante, soit à un dispositif d'enregistrement, ou encore, en tant que signaux de commande, à un dispositif de purge des pièces 1, situé en aval.

Le calculateur 19 est donc utilisé pour effectuer le multiplexage de l'onde en provenance de la source vers les antennes émettrices 21, la mesure des signaux délivrés par chaque tête de détection 16, la synchronisation des mesures de toutes les têtes de détection 16 avec le déplacement de la pièce 1 sur les bandes transporteuses 8 et 9, et enfin l'interprétation des signaux mesurés soit pour localiser les défauts selon la longueur et la largeur de la pièce 1, soit pour déterminer la pente de fil moyenne, ou encore pour calculer la densité moyenne de la pièce 1.

L'utilisation d'un calculateur 19 présente l'avantage de pouvoir automatiser entièrement le dispositif conforme à l'invention, même au niveau de l'interprétation des mesures, permettant ainsi l'exploitation directe des résultats desdites mesures et contrôles par la commande, en aval dans la chaîne de production, d'un dispositif purgeur, notamment sous la forme d'un poste de sciage ou de découpage, éliminant les parties à défauts de la pièce 1, avec une optimisation du débit matière.

Par ailleurs, l'ensemble des éléments constitutifs du dispositif conforme à l'invention, est contrôlé et commandé par un seul calculateur 19 qui est, avantageusement, situé dans un endroit, tel qu'une salle de contrôle, par exemple, isolé des nuisances du milieu industriel.

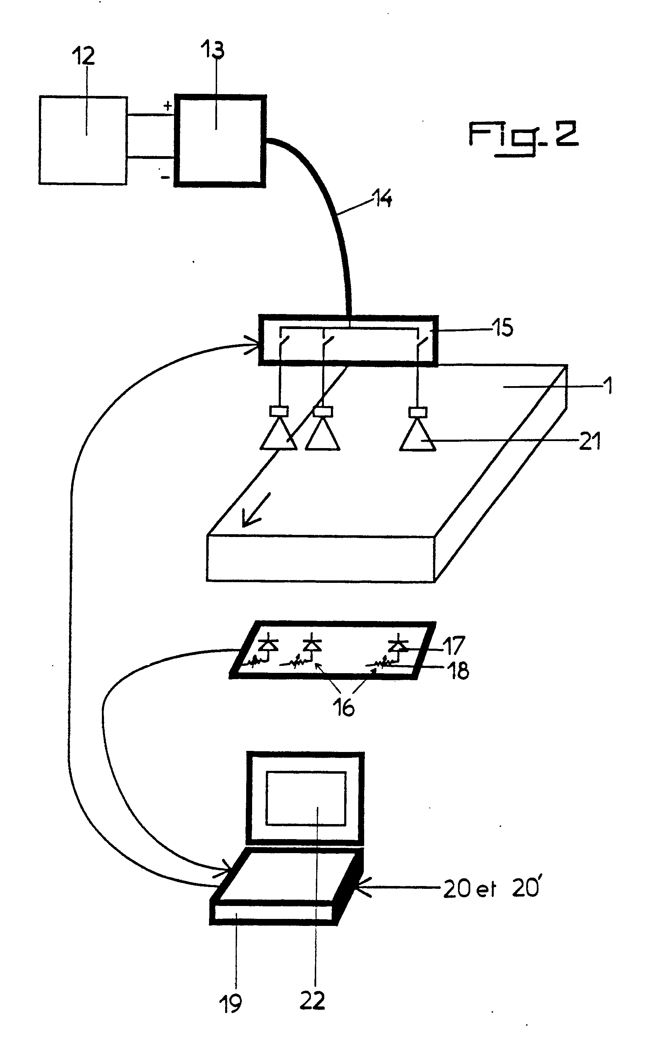

Selon une variante de réalisation de l'invention, et comme le montre la figure 2 des dessins annexés, l'émetteur 4 est constitué, avantageusement, par plusieurs antennes-cornets 21 ou à circuits imprimés, disposées dans le sens de la largeur, de telle manière qu'une bande, délimitée latéralement par les dimensions des antennes-cornets 21 ou à circuits imprimés, et s'étendant sur toute la largeur de la pièce 1, soit traversée par le rayonnement, et en ce que le récepteur 5 est formé de diodes 17 associées à des résistances de charge 18 variables, également disposées dans le sens de la largeur, permettant l'utilisation du dispositif pour la détection, l'identification et la localisation, suivant la longueur et la largeur, des défauts de la pièce 1.

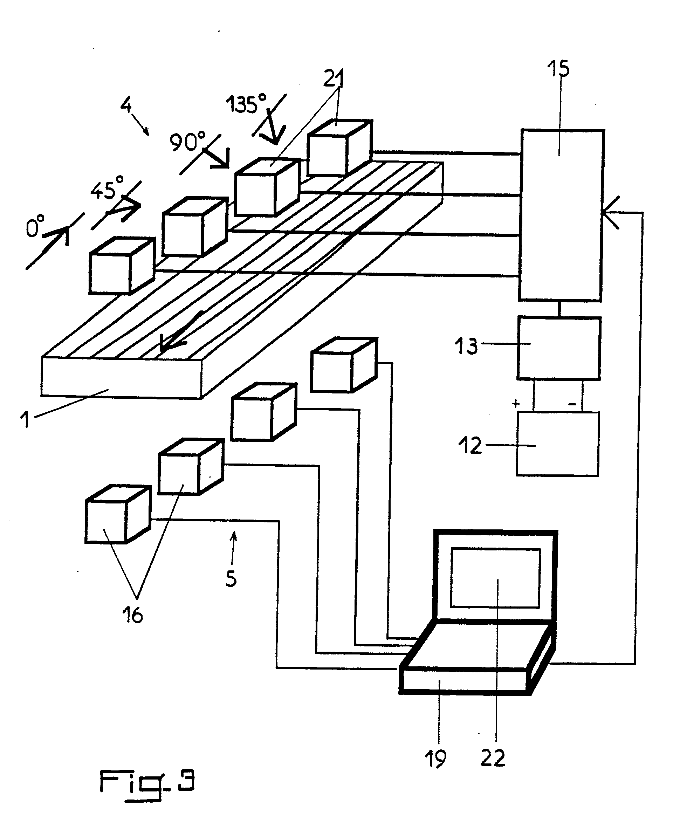

Comme le montrent les figures 4 à 6 des dessins annexés, chaque diode du récepteur 5 fournit, au cours du défilement de la pièce 1 dans la zone 3 de rayonnements, une courbe échantillonnée correspondant à la puissance ayant traversé, en différents points successifs, la pièce 1, dans une zone en forme de bande, délimitée latéralement par la largeur de la surface de réception de la diode. Cette courbe est traitée, successivement, de la manière suivante par le calculateur :
- extraction des "points extrêmes", permettant de limiter le nombre de données à traiter en ne s'intéressant qu'aux valeurs extremes de chaque partie de la courbe représentant une variation,
- application d'un critère quantitatif de variation de la puissance transmise et d'une valeur de seuil autoadaptative pour séparer les variations anormales dues aux défauts, de celles normales présentées par la matière ligneuse saine,
- analyse et identification des motifs de variations de la courbe dus aux défauts.

Cette dernière étape permet, d'une part, de reconnaître la nature du défaut, tel que entaille, noeud, amorce de branche, éclat métallique, clou, etc..., et d'autre part, de localiser celui-ci.

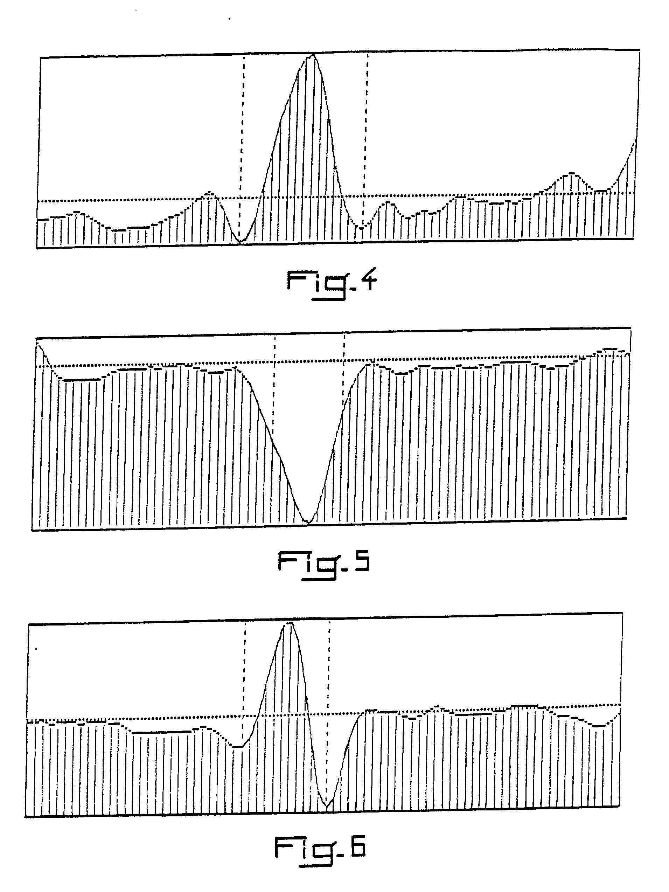

En effet, le repérage longitudinal du centre du défaut se fait aisément à la lecture de l'abscisse du maximum de variation du motif concerné. Le repérage dans le sens de la largeur s'effectue en comparant les différents motifs, obtenus pour un même défaut, sur des cour bes, telles que celles représentées aux figures 4 et 5 des dessins annexés, provenant de diodes juxtaposées. On reconnaît, en effet, aisément, un motif de défaut d'une courbe issue d'une diode ayant capté l'onde électromagnétique qui a traversé ledit défaut par son milieu ; d'où on peut déduire, en connaissant l'emplacement de la diode, le positionnement, dans le sens de la largeur, du centre du défaut. Ainsi, plus le nombre de diodes du récepteur est important, plus la localisation du défaut dans le sens de la largeur sera précise.

Selon une deuxième variante de réalisation de l'invention, et comme le montre la figure 3 des dessins annexés, l'émetteur 4 est constitué par au moins deux antennes 21, alignées selon la longueur et la direction de défilement de la pièce 1, et orientées de telle manière que la direction de propagation de l'onde fasse par rapport à l'axe longitudinal de la pièce 1 un angle déterminé, et en ce que le récepteur 5 est également formé par au moins deux antennes, chacune équipée d'une tête de détection 16 et alignée, du point de vue de la direction de propagation de l'onde, avec une antenne 21 émettrice correspondante, rendant ainsi possible la détermination de la pente de fil moyenne et de la densité moyenne de la pièce 1, en matière ligneuse, examinée.

Cette réalisation particulière du capteur permet donc, en un point donné de la pièce 1, de déterminer la pente de fil moyenne du matériau ligneux formant ladite pièce 1, et ce en comparant les puissances transmises à travers ladite pièce 1 en un point donné, selon différentes orientations du champ micro-onde. Plus le nombre d'antennes de l'émetteur 4 et du récepteur 5 est important, plus la détermination de la pente de fil moyenne est précise ; il faut néanmoins tenir compte du nombre maximal de sorties du multiplexeur 15.

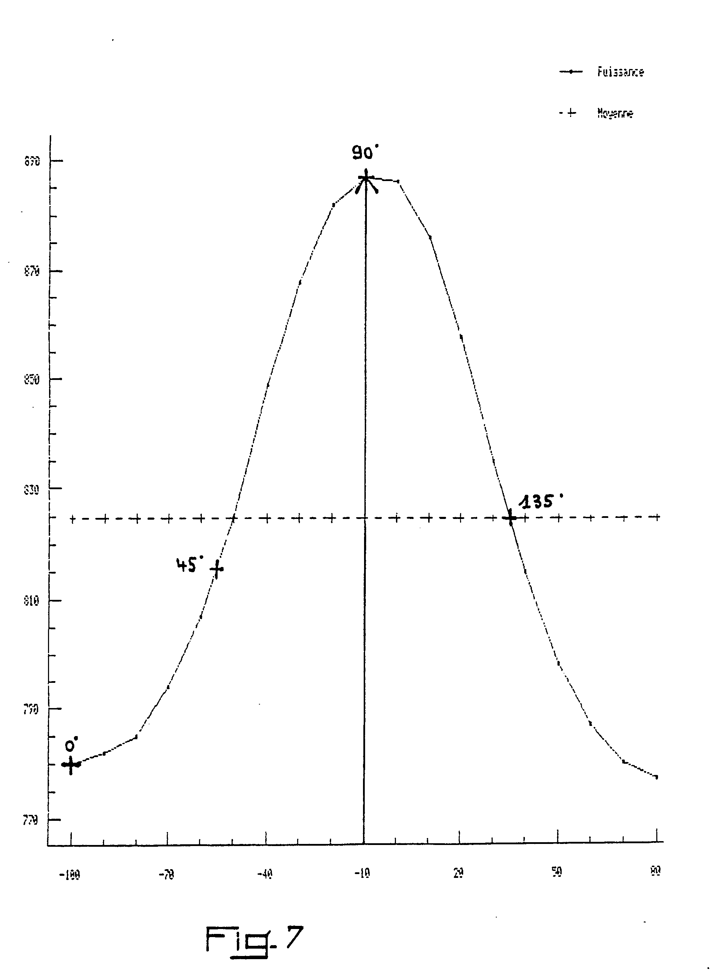

Grâce à cette réalisation de l'invention, on peut également mesurer la densité sur une bande transversale de la pièce 1, grâce à la courbe d'interpolation (figure 7). En effet, la valeur du maximum de cette courbe et celle de la droite représentant sa moyenne, permettent d'établir le modèle de régression de la densité, ceci après un calibrage du dispositif pour l'ensemble des variétés de matières ligneuses à contrôler. La densité ainsi obtenue représente la masse volumique de la pièce 1 au taux d'humidité considéré.

Le dispositif conforme à l'invention, met avantageusement en oeuvre une source de rayonnements électromagnétiques du type hyperfréquence ou micro-ondes 13 délivrant une puissance d'environ 1 W et dont la fréquence est comprise entre 8 GHz et 12 GHz, préférentiellement 10 GHz. La vitesse de défilement maximale admissible pour des mesures valables est de 2 m/s. Les précisions des différentes mesures sont, dans le sens de la localisation des défauts, de 5 mm en longueur et de 10 mm en largeur, dans le cas de la mesure de la densité, de 1 % à 5 % selon les essences, et dans le cas de la détermination de la pente du fil moyen de 2°. L'épaisseur maximale des pièces 1, admissible pour des mesures non erronées, est de 65 mm pour les résineux et de 50 mm pour les feuillus ; l'humidité maximale tolérée est de 25 %.

Le procédé de mesure de caractéristiques physiques, de détection et d'identification de zones de défauts d'une pièce 1, permet d'apprécier qualitativement celle-ci du point de vue de sa constitution physique interne et de ses capacités de résistance mécanique. Il réalise donc, par l'intégration du dispositif, nécessaire à sa mise en oeuvre, dans une chaîne de production, un contrôle rapide et non destructif de pièces 1, notamment en matière ligneuse, et peut également commander une purge automatique des zones de défauts de ladite pièce 1.

De plus, en sauvegardant, soit sur support amovible soit dans une banque de données centralisée, les résultats des mesures et des contrôles, on peut aboutir, par une exploitation ultérieure de ces résultats, à une optimisation de l'emploi de pièces 1 purgées, pour la construction, par exemple, en ce qui concerne les longueurs, les largeurs et les caractéristiques mécaniques des pièces 1 utilisées. Cette exploitation postérieure des résultats des mesures et des contrôles permet une véritable gestion, en qualité et en quantité, du stock de pièces 1 disponibles.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de mesure de caractéristiques physiques, de détection et d'identification de zones de défauts d'une pièce, notamment en matière ligneuse, caractérisé en ce qu'il consiste à faire défiler la pièce (1) à examiner dans une zone (3) de rayonnements électromagnétiques du type hyperfréquence ou micro-ondes, à mesurer l'onde traversant la pièce (1), et à évaluer et à exploiter les données ainsi recueillies.

2. Dispositif pour la mise en oeuvre du procédé selon la revendication 1, caractérisé en ce qu'il est essentiellement constitué par un dispositif tranporteur (2), convoyant la pièce (1) et s'étendant de part et d'autre d'une zone (3) de rayonnements électromagnétiques du type hyperfréquence ou micro-ondes, délimitée par au moins un émetteur (4) et au moins un récepteur (5), disposés sensiblement perpendiculairement au plan du dispositif transporteur (2), par un dispositif électronique (6) de transformation et d'évaluation des signaux de mesure de l'onde traversant la pièce (1), issus du récepteur (5), et par au moins un dispositif de restitution ou d'exploitation des données délivrées par le dispositif électronique (6).

3. Dispositif selon la revendication 2, caractérisé en ce que le dispositif de restitution ou d'exploitation des données comporte un écran de visualisation (22) graphique et/ou alphanumérique.

4. Dispositif selon l'une quelconque des revendications 2 et 3, caractérisé en ce que le dispositif de restitution ou d'exploitation des données est muni, en outre, d'une imprimante et/ou d'un dispositif de sauvegarde des données sur un support amovible.

5. Dispositif selon la revendication 2, caractérisé en ce que le dispositif transporteur (2) est constitué par deux bandes transporteuses (8 et 9) séparées, disposées de part et d'autre de la zone (3) de rayonnement, et alignées entre elles.

6. Dispositif selon la revendication 5, caractérisé en ce que le moteur d'entraînement de chaque bande transporteuse (8 ou 9), est équipé d'un codeur incrémental (20 ou 20'), commandé par le dispositif électronique (6), et permettant d'adapter la vitesse de défilement de la pièce (1) à la vitesse de mesure du dispositif.

7. Dispositif selon la revendication 2, caractérisé en ce que l'émetteur (4) ainsi que le récepteur (5) sont montés, de manière réglable, sur un cadre de support (10 ou 10').

8. Dispositif selon la revendication 7, caractérisé en ce que les cadres supports (10 et 10'), ainsi que le récepteur (5) et l'émetteur (4) sont montés dans des armoires de protection (11 et 11').

9. Dispositif selon l'une quelconque des revendications 2, 7 et 8, caractérisé en ce que l'émetteur (4) est constitué par une alimentation (12), à laquelle est reliée une source (13) de rayonnements électomagnétiques du type hyperfréquence ou micro-ondes, dont la sortie est raccordée, par l'intermédiaire d'un câble coaxial hyperfréquence (14), à un multiplexeur (15) hyperfréquence, commandé par le dispositif électronique (6), le signal issu de la source (13) étant transmis totalement à une, ou, alternativement et partiellement, à plusieurs antennes (21) émettrices, branchées sur une ou plusieurs sorties du multiplexeur (15).

10. Dispositif selon l'une quelconque des revendications 2, 7 et 8, caractérisé en ce que le récepteur (5) est constitué par au moins une tête de réception (16), réalisée au moyen d'au moins une diode (17) associée à une résistance de charge (18) variable.

11. Dispositif selon l'une quelconque des revendications 2, 6 et 9, caractérisé en ce que le dispositif électronique (6), éventuellement muni d'une console d'utilisation (7), est avantageusement sous la forme d'un calculateur (19), commandant simultanément tous les éléments constitutifs du dispositif, traitant et interprétant les données issues du récepteur (5), et délivrant les informations résultantes, relatives à des caractéristiques de la pièce (1) examinée, telles que, notamment, densité moyenne, pente de fil moyenne et emplacement et nature des défauts, soit à un écran de visualisation (22), soit à une imprimante, soit à un dispositif d'enregistrement, ou encore, en tant que signaux de commande, à un dispositif de purge des pièces (1), situé en aval.

12. Dispositif selon l'une quelconque des revendications 2, 7, 8, 9 et 10, caractérisé en ce que l'émetteur (4) est constitué, avantageusement, par plusieurs antennes-cornets (21) ou à circuits imprimés, disposées dans le sens de la largeur, de telle manière qu'une bande, délimitée latéralement par les dimensions des antennes-cornets (21) ou à circuits imprimés, et s'étendant sur toute la largeur de la pièce (1), soit traversée par le rayonnement, et en ce que le récepteur (5) est formé de diodes (17) associées à des résistances de charge (18) variables, également disposées dans le sens de la largeur, permettant l'utilisation du dispositif pour la détection, l'identification et la localisation, suivant la longueur et la largeur, des défauts de la pièce (1).

13. Dispositif suivant l'une quelconque des revendications 2, 7, 8, 9 et 10, caractérisé en ce que l'émetteur (4) est constitué par au moins deux antennes (21), alignées selon la longueur et la direction de défilement de la pièce (1), et orientées de telle manière que la direction de propagation de l'onde fasse par rapport à l'axe longitudinal de la pièce (1) un angle déterminé, et en ce que le récepteur (5) est également formé par au moins deux antennes, chacune équipée d'une tête de détection (16) et alignée, du point de vue de la direction de propagation de l'onde, avec une antenne (21) émettrice correspondante, rendant ainsi possible la détermination de la pente du fil moyenne et de la densité moyenne de la pièce (1), en matière ligneuse, examinée.

Fig.1

EP 0 401 143 A2

EP 0 401 143 A2

Fig. 2

Fig. 3

Fig.4

Fig.5

Fig.6

Fig. 7